# EUROPEAN PATENT SPECIFICATION

(11) **EP 2 583 808 B1**
(45) Date of publication and mention of the grant of the patent: **26.03.2014**
(21) Application number: 11400049.0
(22) Date of filing: 21.10.2011
(51) Int. Cl.: B29C 70/44, B29L 31/08, B29C 43/12

(54) **Preparation of a fibre reinforced composite component with a mould**
Herstellung eines faserverstärkten Verbundbauteils mit einer Form
Préparation d'un composant composite renforcé par des fibres avec un moule

(43) Date of publication of application: 24.04.2013
(73) Proprietor: Eurocopter Deutschland GmbH, 86609 Donauwörth (DE)
(72) Inventor: Ortner, Florian, 91781 Weißenburg (DE); Rauh, Klaus, 86657 Bissingen (DE); Biber, Klaus, 86709 Wolferstadt (DE)
(74) Representative: Schmid, Rudolf

(56) References cited:
- US-A- 2 838 796
- US-A- 3 458 611
- US-A- 4 980 008
- US-A- 4 997 511

## Description

The invention is related to a preparation of a fibre reinforced composite rotor blade root with the features of claim 1.

Composite elements have to be cured under special conditions, such as pressure, temperature and time. The necessary tools are special and costly at present and the quality achieved is not always satisfying.

The document US 6145892 A concerns a connector for producing a press connection with at least one pipe, which is pressed tightly against the connector radially by irreversible deformation or by a collar and also concerns a press connection consisting of a connector and connecting pipe.

The document US 2006072893 A1 discloses a method for producing a termination of an optical fiber bundle. The optical fiber bundle is combined at one end in a crimping sleeve, and the crimping sleeve is introduced with the end of the optical fiber bundle into a compression device having a crimping tool which matches the end geometry of the optical fiber bundle.

The document US 6349572 B1 discloses a method of making an optical fiber bundle (1) from individual optical fibers with good optical properties and a wider applicability includes temporarily mechanically holding individual optical fibers together and pushing them in a snug fit in a single metallic sleeve made from a metallic material that has a sufficient high temperature strength at a forming temperature of the optical fiber glass.

The document US 5366684 A discloses a first surface of a prepreg laminate positioned against a female mold surface. An inflatable bladder is positioned against an opposite surface. A vacuum bag encloses the mold laminate and bag and they are placed in an autoclave. The bladder is inflated to cause the laminate to conform closely to the female mold surface.

The document US 4 997 511 discloses a method and an apparatus for mass producing composite products comprising an autoclave having a cylindrical vacuum chamber. The document US 3 458 611 discloses a method of forming a smooth bore hose of varying flexibility. The document US 2 838 796 discloses a method and an apparatus for pressure curing of materials.

It is an object of the invention to provide an improved preparation of a fibre reinforced composite rotor blade root.

The solution is achieved with the preparation as claimed in claim 1.

A mould with an essentially annular pressure sleeve for arrangement around a fibre reinforced composite component for preparation of said fibre reinforced composite component comprises a radial inner surface and an essentially coaxial outer surface, said outer surface being form stable and said inner surface being a semi rigid counter mould. Said radial inner surface and said essentially coaxial outer surface are at their respective lateral ends assembled to provide an essentially cylindrical shaped, pressure tight reservoir. Supply means are provided for a pressure and/or heat transmitting medium in between said inner surface and said coaxial outer surface of said reservoir. The mould allows a simplified and accelerated preparation of fibre reinforced composite components, particularly for aircrafts, automobile engineering, pieces of sports equipment or other industrial applications without the need for expensive tools such as curing ovens. The mould further allows even compacting pressure by means of the essentially annular pressure sleeve avoiding the formation of wrinkles while preparing a fibre reinforced composite component. The mould further allows operating media independent of its application to different profiles, namely independence of an application to a plan like or to a circular component. The mould further allows good quality of the prepared fibre reinforced composite components at minimized costs of any tools used.

The inner surface of the essentially annular pressure sleeve is a ductile membrane, particularly a layered not vulcanized silicone membrane, said membrane being mobile in radial direction with regard to the outer surface. The inner surface with a layered not vulcanized silicone membrane allows distribution of even pressure all over the periphery of a fibre reinforced composite component being encompassed by the essentially annular pressure sleeve. An advantage of the layered not vulcanized silicone membrane is its ductility and temperature resistance allowing in a certain range a plurality of applications for the essentially annular pressure sleeve and thus improved flexibility of the mould.

According to a further preferred embodiment the profile of the outer surface of the pressure sleeve is adapted to the fibre reinforced composite component to be prepared, particularly said profile of the outer surface is essentially cylindrical or oval.

The pressure and/or heat transmitting medium is air preferably with a pressure between 0.2 to 2 bar and preferably heated from 20° C - 220° C. The heated air is suitable to substitute any curing oven for the preparation of a fibre reinforced composite component and reduces the time of curing.

According to a further preferred embodiment control means are provided for control of the supply means. Said control allows tuning of the pressure and tuning of the heat of the pressure and/or heat transmitting medium for an economic preparation of a fibre reinforced composite component without curing oven.

According to the invention the preparation of a fibre reinforced composite component with the mould with a pressure sleeve according to the invention is done with the following steps: applying of a tape binding to a fibre reinforced composite component, imposing subsequently the pressure sleeve on the attached tape binding on the fibre reinforced composite component, fitting the inner surface against the attached tape binding, supplying air pressurized between 0.2 - 2 bar into the tight reservoir to press the inner surface of the pressure sleeve snugly against the attached tape binding on the fibre reinforced composite component, and maintaining for a defined interval, such as 2 h the pressure to cure the tape binding to the fibre reinforced composite component.

According to a further preferred embodiment of the invention the supplied air is heated till up to 135° C for a defined interval, such as 2 h. Pressure and heat are maintained for 2 h at the pressure sleeve to cure the tape binding to the fibre reinforced composite component without the need for a curing oven.

According to the invention the tape binding is provided as prepreg material.

Preferred embodiments of the invention are presented with reference to the enclosed description and attached drawings.
Fig. 1 shows a cross sectional view of a mould according to the invention, and
Fig. 2 shows a cross sectional view of a preferred embodiment of the mould according to the invention.

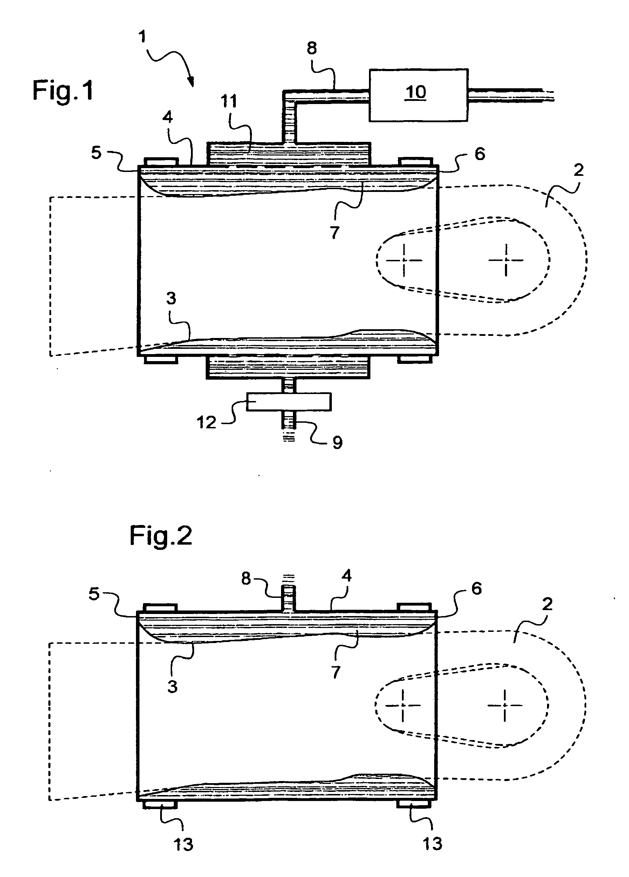

According to Fig. 1 a mould 1 is arranged closely around a rotor blade root 2 as a component of fibre reinforced composite. The mould 1 comprises a pressure sleeve with a radial inner surface 3 radial inside a coaxial outer surface 4, said outer surface 4 being form stable and said inner surface 3 being a semi rigid counter mould for said fibre reinforced composite component 2.

The radial inner surface 3 and said coaxial outer surface 4 of the pressure sleeve are assembled by hose clips 13 at their respective lateral ends 5, 6 to an annular, pressure tight reservoir 7 radial inside of said coaxial outer surface 4. The outer surface 4 is provided as a cylindrical aluminium tube and the inner surface 3 is provided as a layered not vulcanized silicone membrane radial mobile with regard to the outer surface 4 and with regard to said fibre reinforced composite component 2.

Supply means of the pressure sleeve comprise an air inlet 8 and an air outlet 9. Air as pressure and/or heat transmitting medium is supplied through a flow-type heater 10 and an inlet manifold 11 with radial orifices of the air inlet 8 into the annular reservoir 7 between said inner surface 3 and said coaxial outer surface 4. The air outlet 9 from the annular reservoir 7 comprises radial orifices towards an outlet manifold 12 and an output connection with air pressure control means. The air inlet 8 and the air outlet 9 are either integrated into an open pressure circuit, said open pressure circuit venting the pressurized air after the air outlet 9 or the air inlet 8 and the air outlet 9 are integrated into a closed pressure circuit recycling the heated pressurized air.

According to Fig. 2 corresponding features are referred to with the references of Fig. 1. The mould 1 is arranged closely around the rotor blade root 2 as a component of fibre reinforced composite. The mould 1 comprises the pressure sleeve with the radial inner semi rigid surface 3 as a counter mould for said fibre reinforced composite component 2 radial inside the form stable coaxial outer surface 4.

The radial inner surface 3 and said coaxial outer surface 4 of the pressure sleeve are assembled at their respective lateral ends 5, 6 to the annular and pressure tight reservoir 7.

Supply means of the pressure sleeve comprise an air inlet 8 providing an air pressure of 0.5 bar in the pressure tight reservoir 7.

Preparation of a fibre reinforced composite component with the mould with a pressure sleeve

For application of a tape binding to the root 2 of a rotor blade as a fibre reinforced composite component said tape binding is first attached to the root 2. The tape binding is provided as prepreg material.

Subsequently the pressure sleeve is imposed on the attached tape binding on the root 2 with the inner surface 3 fitted against the attached tape binding. Air pressurized between 0.5 - 0.9 bar is supplied into the tight reservoir 7 to press the inner surface 3 snugly against the attached tape binding on the root 2. The supplied air is heated to 135° C for 2 h. Pressure and heat are maintained for 2 h at the pressure sleeve to cure the tape binding to the root 2.

### Reference List

- 1: mould
- 2: rotor blade root
- 3: radial inner surface
- 4: coaxial outer surface
- 5: lateral end
- 6: lateral end
- 7: annular, pressure tight reservoir
- 8: air inlet
- 9: air outlet
- 10: flow-type heater
- 11: inlet manifold
- 12: outlet manifold
- 13: hose clips

## Claims

1. A preparation of a fibre reinforced composite rotor blade root with a mould (1) with a pressure sleeve, said pressure sleeve being arranged around said fibre reinforced composite rotor blade root (2), said at least one pressure sleeve comprising a radial inner surface (3) and an essentially coaxial outer surface (4), said outer surface (4) being form stable and said inner surface (3) being a semi rigid counter mould, made of a layered not vulcanized silicone membrane, radial mobile with regard to the outer surface (4) and with regard to said fibre reinforced composite rotor blade root (2), said radial inner surface (3) and said essentially coaxial outer surface (4) being at their respective lateral ends (5, 6) assembled to provide an annular pressure tight reservoir (7), and supply means (8, 9) being provided at said outer surface (4) for a pressure and/or heat transmitting medium supplied between said inner surface (3) and said coaxial outer surface (4) of said reservoir (7), said preparation comprising the following steps:
applying at least one prepreg material to a fibre reinforced composite rotor blade root (2),
imposing subsequently the pressure sleeve on the at least one attached prepreg material on the fibre reinforced composite rotor blade root (2),
fitting the inner surface (3) of the pressure sleeve against the at least one attached prepreg material,
supplying air pressurized between 0.2 - 2 bar into the tight reservoir (7) to press the inner surface (3) of the pressure
sleeve snugly against the at least one prepreg material attached on the fibre reinforced composite rotor blade root (2),
heating the supplied air till up to 220° C for a defined interval, such as 2 h, and
maintaining for said defined interval, such as 2 h the pressure to cure the at least one prepreg material attached to the fibre reinforced composite rotor blade root (2).

## Patentansprüche

1. Herstellung eines faserverstärkten Verbundwerkstoff-Rotorblattfußes mit einer Gussform (1) mit einer Druckhülse, wobei die Druckhülse um den faserverstärkten Verbundwerkstoff-Rotorblattfuß (2) angeordnet ist, wobei die wenigstens eine Druckhülse eine radial innere Fläche (3) und eine im Wesentlichen koaxiale äußere Fläche (4) aufweist, wobei die äußere Fläche (4) formstabil ist und die innere Fläche (3) eine halbstabile Gegengussform ist, hergestellt aus einer beschichteten, nicht vulkanisierten Siliconmembran, die bezüglich der äußeren Fläche (4) und bezüglich des faserverstärkten Verbundwerkstoff-Rotorblattfußes (2) radial beweglich ist, wobei die radial innere Fläche (3) und die im Wesentlichen koaxiale äußere Fläche (4) an ihren jeweiligen seitlichen Enden (5, 6) zusammengefügt sind, um einen ringförmigen druckdichten Behälter (7) zu bilden und wobei Zufuhrmittel (8, 9) an der äußeren Fläche (4) vorgesehen sind für die Zufuhr eines Druck und/oder Wärme übertragenden Mediums, welches zwischen der inneren Fläche (3) und der koaxialen äußeren Fläche (4) des Behälters (7) zugeführt wird, wobei die Herstellung folgende Schritte aufweist:
Anbringen mindestens eines Prepreg-Materials auf einem faserverstärkten Verbundwerkstoff-Rotorblattfuß (2),
anschließendes Aufbringen der Druckhülse auf das mindestens eine auf dem faserverstärkten Verbundwerkstoff-Rotorblattfuß (2) befestigte Prepreg-Material,
Anlegen der inneren Fläche (3) der Druckhülse gegen das mindestens eine befestigte Prepreg-Material,
Beaufschlagen des dichten Behälters (7) mit unter einem Druck von 0,2 - 2 bar stehender Luft, um die innere Fläche (3) der Druckhülse eng gegen das mindestens eine Prepreg-Material anzupressen, das an dem faserverstärkten Verbundwerkstoffmaterial-Rotorblattfuß (2) befestigt ist,
Aufheizen der zugeführten Luft bis auf eine Temperatur von 220°C für einen definierten Zeitraum, wie z.B. 2 Stunden, und
Beibehalten des Drucks für einen definierten Zeitraum, wie z.B. 2 Stunden, um das an dem faserverstärkten Verbundwerkstoff Rotorblattfuß (2) befestigte Prepreg-Material zu härten.

## Revendications

1. Préparation d'un pied de pale de rotor composite renforcé de fibres avec un moule (1) avec un manchon de pression, ledit manchon de pression étant disposé autour dudit pied de pale de rotor composite renforcé de fibres (2), ledit au moins un manchon de pression comprenant une surface interne radiale (3) et une surface externe essentiellement coaxiale (4), ladite surface externe (4) étant de forme stable et ladite surface interne (3) étant un contre-moule semi-rigide, constitué d'une membrane stratifiée de silicone non vulcanisé, mobile radialement par rapport à la surface externe (4) et par rapport audit pied de pale de rotor composite renforcé de fibres (2), ladite surface interne radiale (3) et ladite surface externe essentiellement coaxiale (4) étant à leurs extrémités latérales respectives (5, 6) assemblées pour produire un réservoir annulaire étanche à la pression (7) et un moyen d'alimentation (8, 9) étant disposé au niveau de ladite surface externe (4) pour un milieu de transmission de pression et/ou chaleur disposé entre ladite surface interne (3) et ladite surface externe coaxiale (4) dudit réservoir (7), ladite préparation comprenant les étapes suivantes :
appliquer au moins un matériau préimprégné à un pied de pale de rotor composite renforcé de fibres (2),
apposer ensuite le manchon de pression sur l'au moins un matériau préimprégné attaché sur le pied de pale de rotor composite renforcé de fibres (2),
ajuster la surface interne (3) du manchon de pression contre l'au moins un matériau préimprégné attaché,
introduire de l'air pressurisé entre 0,2 et 2 bar dans le réservoir étanche (7) pour bien appuyer la surface interne (3) du manchon de pression contre l'au moins un matériau préimprégné attaché sur le pied de pale de rotor composite renforcé de fibres (2),
chauffer l'air introduit jusqu'à 220 °C pendant un intervalle défini, tel que 2 h, et
maintenir pendant ledit intervalle défini, tel que 2 h, la pression pour durcir l'au moins un matériau préimprégné attaché au pied de pale de rotor composite renforcé de fibres (2).
